# EUROPEAN PATENT APPLICATION

(11) **EP 1 759 743 A1**
(43) Date of publication of application: **07.03.2007**
(21) Application number: 06015862.3
(22) Date of filing: 31.07.2006
(51) Int. Cl.: A63D 15/20, G07F 17/38, A63D 15/00, A63F 13/08

(54) **One-player pool scoring system and method**

(30) Priority: 29.07.2005 US 703509 P
(71) Applicant: Tournament Games, Inc., Lebanon TN 37087 (US)
(72) Inventor: Pearson, Jack, Lebanon Tenessee 37087 (US)
(74) Representative: Glaeser, Joachim

(57) **Abstract**

A method for scoring a one-player online pool game including setting a countdown timer to a predetermined amount prior to taking a pool shot, stopping the countdown time when a game ball is pocketed, and awarding a player with a score that is related to the time that remains on the countdown timer when the ball is pocketed.

## Description

### BACKGROUND OF THE INVENTION

### Field of the Invention

The present invention relates generally to a pool scoring method for en electronic pool game, and more particularly to a one-player online pool scoring method that facilitates tournament play of such games. A number of novel tournament structures for electronic pool are also disclosed.

### Related Art

Conventional electronic pool and online pool games exist as two-player pool games. Scoring systems for conventional online two-player pool games are determined by the play of competing opponents. In an online two-player pool game such as straight pool, the player who scores the pre-determined point total for a game (e.g., 150 points) prior to his opponent, wins the game. In an online two-player pool game such as eight ball, one player must pocket balls of the group numbered 1 through 7 (solid colors), while the other player has 9 thru 15 (stripes). The player pocketing his group first and then legally pocketing the 8-ball wins the game. In an electronic two-player pool game such as nine ball, if a player pockets any ball on a legal shot, he remains at the table for another shot, and continues until he misses, fouls, or wins the game by pocketing the 9-ball. A match ends when one of the players has won the required number of games.

Electronic pool as referred herein are games that allow a player to orient a virtual cue with respect to a cue ball and then control the cue to strike the ball. In conventional electronic games, in addition to the orientation and speed that the cue hits the virtual ball, a player can also control the location that the cue tip hits the virtual cue ball to also provide simulated top spin, back spin or side spin on the ball. The cue ball then moves on the table and may interact with the other virtual balls on the table and the sidewalls of the table according to a predetermined algorithm.

Electronic two player pool is not particularly amenable to on-line play because is not. It is not always possible for a person desiring to play pool to locate an opponent online. In addition, some on-line players would prefer to play against a computer rather than an actual competing player. Accordingly, it may be desirous to develop online pool games for one player. One difficulty in developing such one player pool games results from the fact that the scoring systems for one-player pool games are most commonly determined by the play of competing opponents. What is needed, then, is a one-player online pool scoring methods. Such a scoring methods would provide interesting games for one-player pool and enable the creation of tournaments for play.

### BRIEF SUMMARY OF THE INVENTION

It is an object of the invention to develop a one-player online pool scoring system and method. With a one-player pool game, players can then play pool online at anytime without having to wait to find a partner to play against. A further object is to provide a skilled based on-line game, adaptable for tournament structures, where a player may post a score that is dependant on the exercise of skill.

In an embodiment of the invention, an online pool scoring method includes the use of a count down timer. When a single player pockets a ball, the player is awarded the points that remain on the timer.

In alternative embodiments of the inventions, certain balls may be selected to provide a bonus if the ball is pocketed within a predertermined time. Likewsie, certain pockes may be and a player may be awarded bonus point if a ball is sunk in the selected pocket before a predetermined time period has elapsed.

The invention also involves these scoring methods in tournament structures wherein, a player may select entered a structure tournament with predetermined criteria. For instance a tournament may be limited to a conventional pool game wherein the object is to sink all the balls on table as rapidly as possible. The balls may be oriented in conventional triangular arrangements or other arrangements. The number of balls in the games may also altered.

An alternative game may involve a structure where the score is based upon the fewest number of shots, or a combination of the fewest number o shots and the time elapsed to play the game. In yet a further alteratives, other pool games would be designed, such as rotation wherein each of the ball on the table would have to be sunk according to the number designated on the ball. Balls that are sunk out of order would be returned to the table at a predetermined location. The ball that is in line for play would be designated by additional graphics, such as providing additional contrast around the ball.

Tournament structure could include maiden tournaments where the players that are eligible are those that have not previously won a tournament. In addition, a player's skill could be gauged by their participation in tournaments. For example, the player's score could be rated against other scores in tournament and a value or class be assigned to the player, In an additional embodiment, tournaments are structured to be limited to a certain class of players.

Further objectives and advantages, as well as the structure and function of preferred embodiments will become apparent from a consideration of the description, drawings, and examples.

### BRIEF DESCRIPTION OF THE DRAWINGS

The foregoing and other features and advantages of the invention will be apparent from the following, more particular description of a preferred embodiment of the invention, as illustrated in the accompanying drawings wherein like reference numbers generally indicate identical, functionally similar, and/or structurally similar elements.

FIG. 1 depicts a screen display of an exemplary embodiment of a pool scoring method according to the present invention;

FIG. 2 depicts a screen display of an exemplary embodiment of a pool scoring method according to the present invention;

FIG. 3 depicts a screen display of an exemplary embodiment of a pool scoring method according to the present invention;

FIG. 4 depicts a screen display of an exemplary embodiment of a pool scoring method according to the present invention;

Fig. 5 depicts a screen display listing the a series of on line, one player pool tournaments available for play.

Fig. 6. depicts a screen shot containing information relating to a particular tournament and players scores that have been entered.

Fig. 7 depicts a screen shot available with a window display that provides summary information regarding a particular tournament.

Fig. 8 despicts a screen shot of a game having nine balls oriented in a star-shaped configuration at the break.

Fig. 9 depicts an alternative break orientation.

Fig. 10 depicts a further orientation of the ball prior to the break.

Fig. 11 depicts yet another orientation of balls prior to the break.

### DETAILED DESCRIPTION OF THE INVENTION

Embodiments of the invention are discussed in detail below. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the spirit and scope of the invention. All references cited herein are incorporated by reference as if each had been individually incorporated.

In an exemplary embodiment of the invention, to score a one-player online pool game, a countdown timer is used. In such an embodiment, the timer may begin counting down when the player takes his or her first shot. The timer may continue to count down until the player pockets a ball. When the player pockets a ball, the timer stops and the player receives, as a score, a number of points that is equal to the value remaining on the timer. If there are multiple balls on the pool table, the timer may restart and the player may continue to attempt to shoot the remaining balls into the pockets. When the player pockets a second ball, the timer stops and the player receives, as a score, a number of points that is equal to the value remaining on the timer. This score may be added with the previous score to render a total score. In an exemplary embodiment of the invention, if the timer expires (i.e., reaches zero or some other predetermined floor amount such as 10), the player will continue to attempt to pocket a ball without the timer continuing to count down.

An exemplary embodiment of the invention will now be described by way of the following example. Assume that there are three game balls to be pocketed. The player begins by breaking the game balls, and for this example, assume that the player does not pocket any of the game balls on the break. When the player, using a mouse or a keyboard, for example, initiates the breaking of the three game balls, a count down timer begins counting down from e.g., 1000. In this example, the countdown timer may count down ten points per one second of real time. In other words, after ten seconds, the timer may read 900. On the second shot, the player pockets one of the balls, At that point, the timer reads 850. When the shot is made, the timer stops and 850 points are added to the player's score.

Immediately after the points are awarded, the timer resets itself to 1000 and begins counting down again. Alter several misses, the timer has expired and the player has still not pocketed one of the remaining two balls. In this example, when the timer expires, it remains at 10. Once the player pockets one of the balls, 10 points are added to the players score, giving the player a total score of 860 points.

Immediately after the points are awarded, the timer resets itself to 1000 and begins counting down again as the player attempts to pocket the final remaining ball. On the first shot, the player pockets the final ball. At that point, the timer reads 940. When the shot is made, the timer stops and 940 points are added to the player score, giving the player a total score of 1800 points for the game.

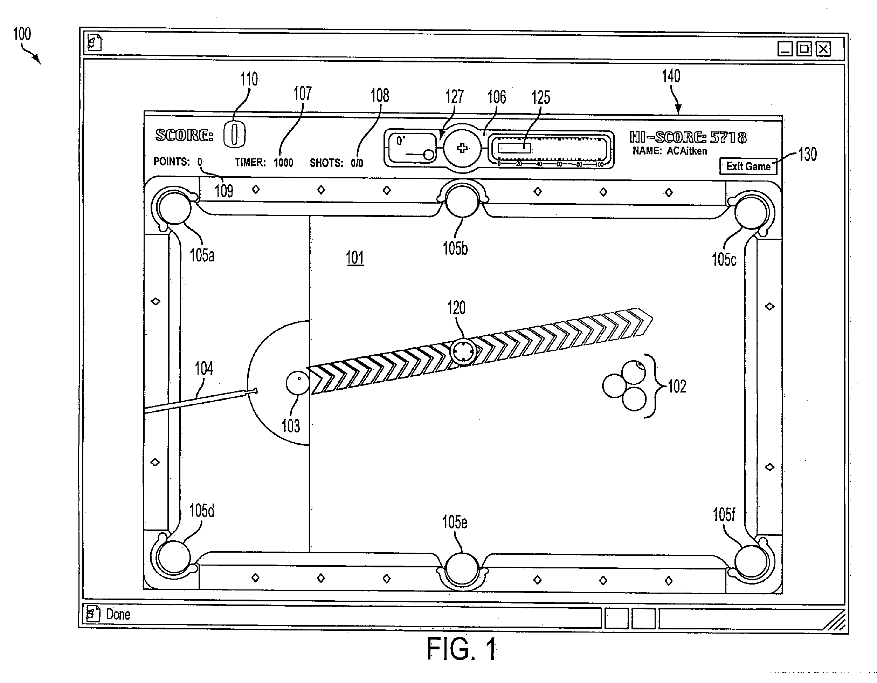

Figure 1 depicts an example of a screen display of an online pool interface 100 that can be used for one-player online pool games according to the present invention. Online pool interface 100 may include pool table 101, aiming interface 106, timer 107, shot counter 108, points indicator 109 and total score indicator 110. In an exemplary embodiment of the invention, pool table 101 may include game balls 102, queue ball 103, queue stick 104, and pockets 105a-f. In an exemplary embodiment of the invention, online pool interface 100 may illustrate the beginning of a three-ball one-player pool game.

Play of the game proceeds by aligning the target indicator 120 to any location on the playfield 101. A player may also control the speed that the cue hits the ball by altering the gauge 125. The angle that the cue hits the ball may be altered by adjusting the degree controller 127. After the target indicator is aligned, the mouse activates the shot and the cue hits the cue ball in the directe that has been targeted. The target indicator and shot controller features are disengaged until all balls come to rest on the table. An exit game feature 130 is also provided than enable the player to end a game at any time. The high scoew is posted so that a player can determine the relative skill that that will be required to win the game as he plays.

One advantage of the game is a built in browser that contact the tournament site to receive input relating to the. After receiign input, the play may proceed using the data on the preexisting pool program that resides and executes on a player's personal computer. When the game is complete, the browser then once again automatically contacts the tournament games website and communicates information relating to the play of the game. If a winning score is posted, the computer can receive additional information relating to the play of the game that will help determine if the play was fairly executed. Next the information from the game is compared to the other information posted for the tournament that was selected.

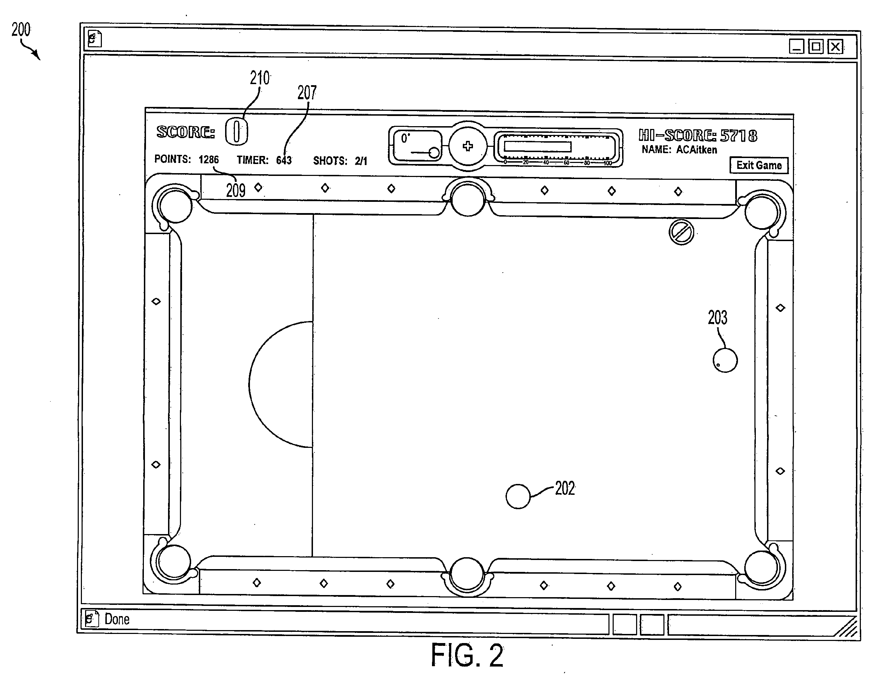

. Figure 2 depicts an exemplary screen display of an online pool interface 200 that can be used for one-player online pool games according to the present invention. In the exemplary embodiment illustrated in Figure 2, using queue ball 203, the player pocketed two balls (not shown) at the same time. In an exemplary method for scoring a scenario where multiple balls are pocketed on the same shot, to determine the points awarded for the shot, the time remaining on the timer 207 may be multiplied by the number of balls pocketed. In the example illustrated in Figure 2, because two balls were pocketed at once, the amount remaining on the timer 207 (i.e., 643) is multiplied by two to determine a total of points awarded (i.e., 1268) on the points indicator 209 for that shot. This total may then be added to the total score and reflected on score indicator 210.

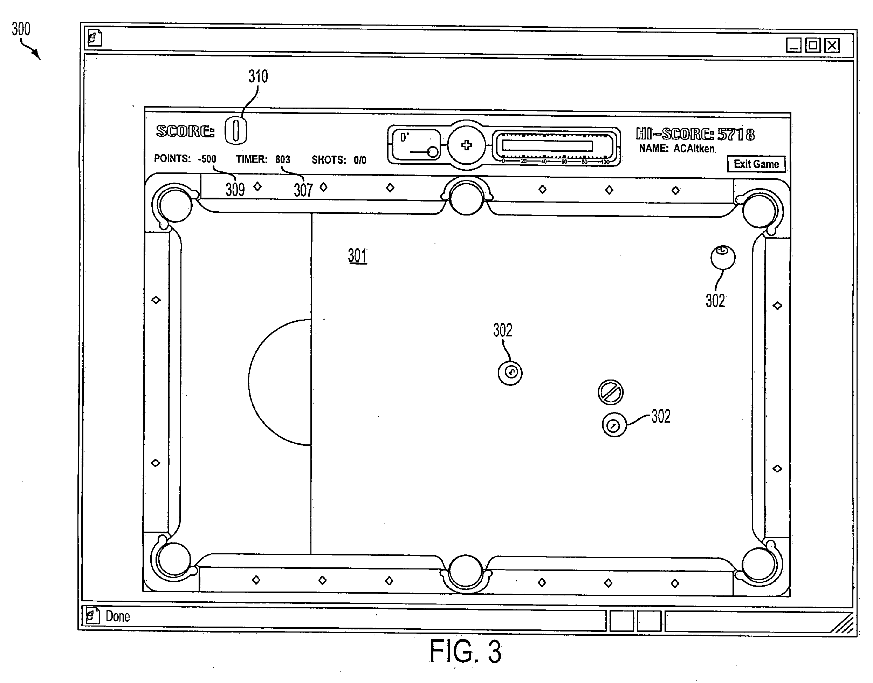

In one embodiment of the invention, the scoring system may also account for player faults, such as when a player pockets the cue ball (i.e., a scratch). A Figure 3 depicts an exemplary screen display of an online pool interface 300 that can be used for one-player online pool games according to the present invention. As shown in the exemplary embodiment illustrated in Figure 3, only the three game balls 302 remain on table 301 because the player has pocketed the queue ball (not shown). To account for the player pocketing the queue ball, in an exemplary embodiment of the invention, regardless of the time remaining on the timer, the player may be awarded negative points (i.e., -500 points). As shown in Figure 3, when timer 307 stops, points indicator 309 does not reflect the value of the timer (i.e., 803), but instead shows negative points awarded (-500) for the scratch. This total may then be added to the total score and reflected on score indicator 310.

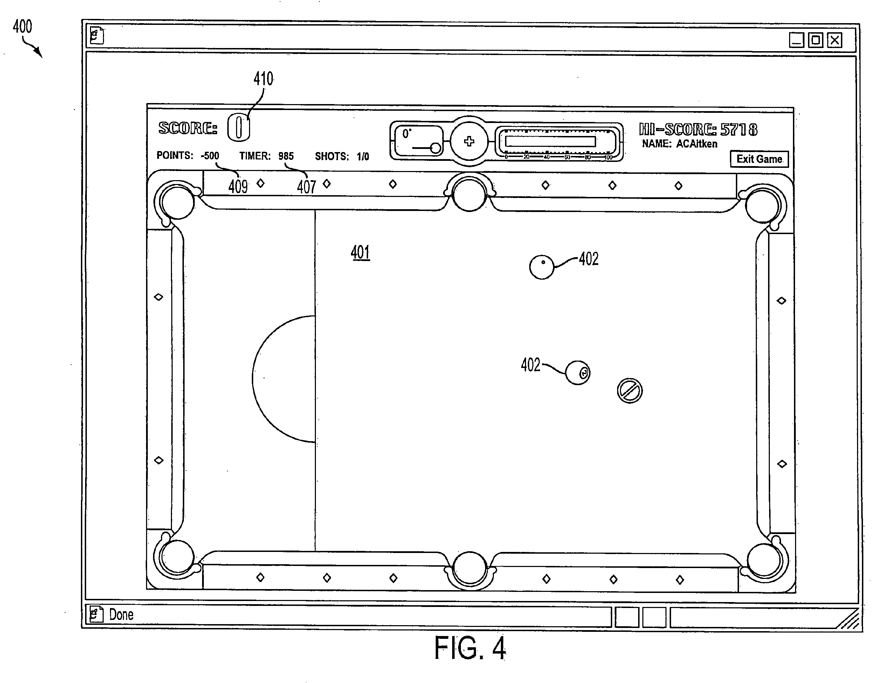

In a further embodiment of the invention, when a player pockets both the queue ball and a game ball, negative points may also be awarded. Figure 4 depicts an exemplary screen display of an online pool interface 400 that can be used for one-player online pool games according to the present invention. As shown in the exemplary embodiment illustrated in Figure 4, only two game balls 402 remain on table 401 because the player has pocketed the queue ball (not shown) and one of the game balls (not shown). To account for the player pocketing the queue ball, in an exemplary embodiment of the invention, regardless of the time remaining on the timer, the player may be awarded negative points (i.e., -500 points). As shown in Figure 4, when timer 407 stops, points indicator 409 does not reflect the value of the timer (i.e., 985), but instead shows negative points awarded (-500) for the scratch. This total may then be added to the total score and reflected on score indicator 410. In an alternative embodiment of the invention, the negative points (-500) may be subtracted from the value of the timer (i.e., 985). In such an embodiment, an adjusted score (i.e., 485 points) may be added to the total score and reflected on score indicator 410.

In further embodiments of the invention, alternative scoring methods may be employed for a one-player online pool game. For example, a random-timed "hot pocket" may be designated which would enable the player to score bonus points if a ball was pocketed in that pocket while it is "hot." Similarly, a randomly-designated "hot ball" may enable the player to score bonus points if the hot ball was made while the ball was "hot." A visual indication is provided on the ball or pocket to signal that bonus points are awarded for sinking the particular ball or sinking a ball in a particular pocket. In still a further embodiment, a player may be awarded, double-bonus points if he or she is able to pocket a "hot ball" in a "hot pocket" while both the ball and pocket are "hot." IN yet a further embodiment the value of the bonus may be displayed on the ball or pocket and the value decreases to zero as time elapses.

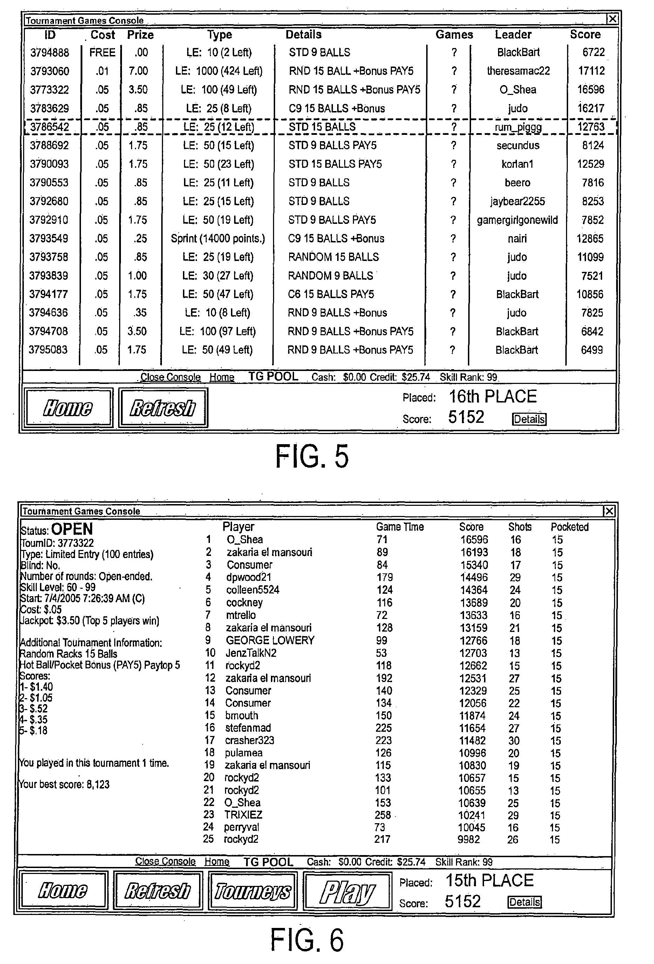

Now referring to Fig. 5, a screen display is provided that is maintained by the website that identifies a number of tournaments that are available for play and identifies details regarding the game such as the type of pool game, the number of balls, the cost of the game and the prizes that are awarded, and the current leader of the game. A player can select one of these tournaments and begin play. Fig. 6 is a screen display providing detailed information regarding a particular tournament including the scores of the top 25 players that have entered the particular tournament. As reflected in the "skill level" field, certain tournaments may be limited to individuals with certain skill levels that are determined by previous play experience. For example, the server tracks the play of each particular player and using an algorithm establishes a skill level based upon the players past performance.

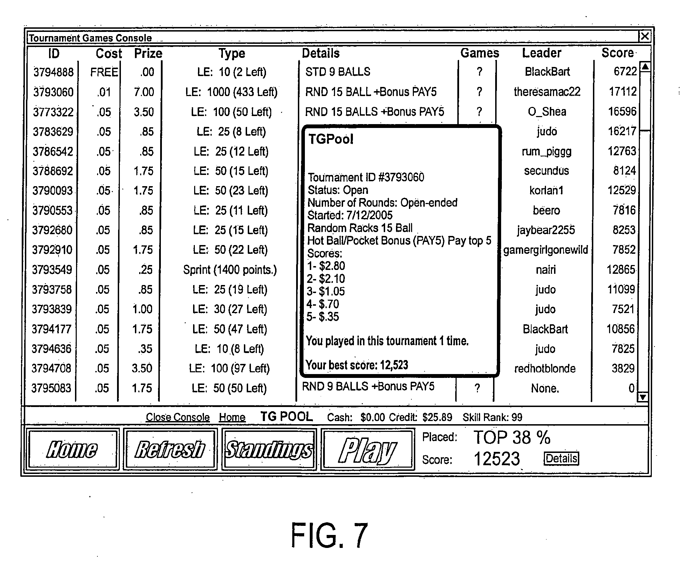

Now referring to Fig. 7, yet a further screen display is presented that includes a drop down window that provides details regarding an active tournament and, the player had previously entered the tournament, the player's best score.

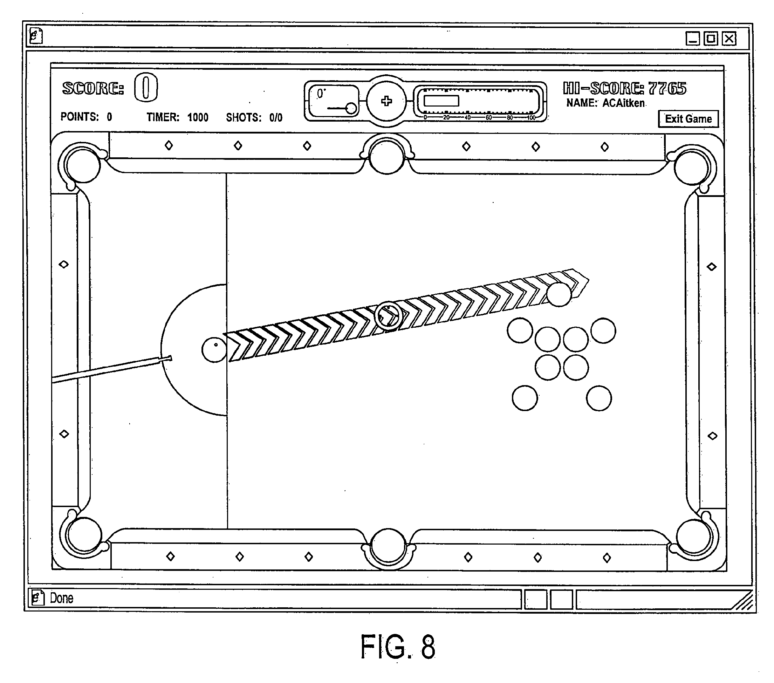

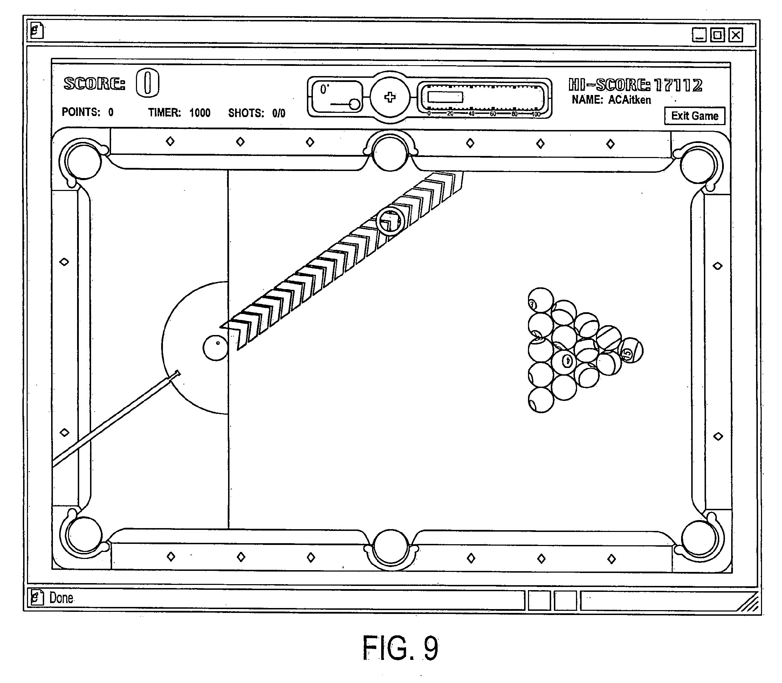

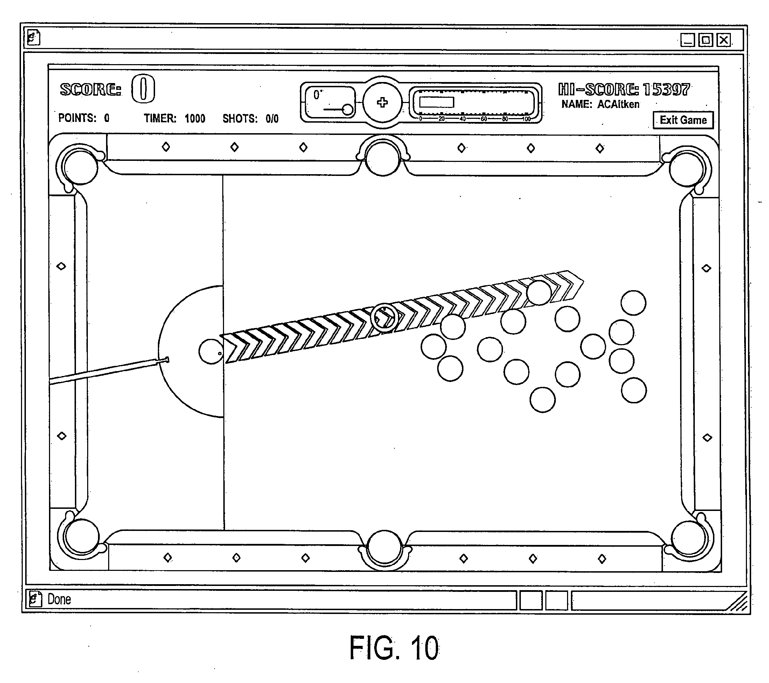

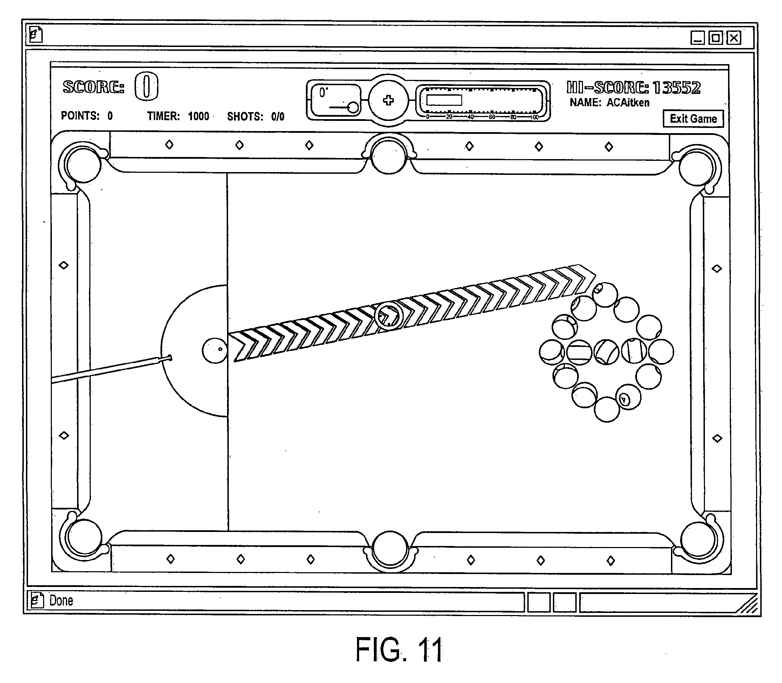

Fig. 8 depicts a screen shot of a particular playfield prior to the initiation of a game. As seen in Fig. 8, the balls on the table are oriented in a star configuration and the score, the number of points and the number of shots are all at zero. Fig. 9 depicts and alternative embodiment of a play field in a tournament with 15 balls in a triangular pattern that is reversed from the conventional orientation. As indicated in the upper right hand side of the frame, the high score of the particular tournament is 17, 112. Figs. 10 and 11 depict yet a further screen displays with the balls in yet another initial orientation. The number of types of possible ball orientation is essentially limitless. Player's participating in a particular tournament may be provided the same sequence of ball orientations, or in an alternative embodiment, be provided with random ball racks.

As referred to above, one aspect of the invention provides for different rules governing entry of a particular tournament. For example a tournament may only have 10 players and as a condition of entry none of the player must have previously won a tournament. In alternative rule set, all of the player must have never finished in a tournament in a position that awards a cash prize. Tournaments may be organized for different entry fees and different awards. Certain tournaments may only allow highly skilled player to compete, while other tournaments may be limited to less skilled players.

The program that implements the play of the game may reside on the player's personal computer. Play is initiated by downloading the particular rule set and initial ball orientation and proceeds until all balls are pocketed. Next a built in browser contacts the website and automatically uploads the score. A central server then processes the information and then posts the players score along with an update of all the scores in the particular tournament. In further contemplated variations, the dynamics or physics of the game may be altered such as simulating balls and bumpers on the pool table that are more elastic or less elastic. The game may be played in slow motion and other special effects may be provided, including sounds such as applause for pocketed shots, or other sounds for shots that are missed. In yet a further tournament refereed to as a "sprint game", play for all entries begins at a predetermined time and the first player to reach a predetermined score wins the tournament. In a contemplated "no clock" tournament, the winner may be the player that pockets all the balls with the fewest shots. In yet another tournament, the winner is the player that pockets all the balls in the least amount of time. In each of the tournaments there may be multiple racks of balls or just a single rack.

The embodiments illustrated and discussed in this specification are intended only to teach those skilled in the art the best way known to the inventors to make and use the invention. Nothing in this specification should be considered as limiting the scope of the present invention. All examples presented are representative and non-limiting. The above-described embodiments of the invention may be modified or varied, without departing from the invention, as appreciated by those skilled in the art in light of the above teachings. It is therefore to be understood that, within the scope of the claims and their equivalents, the invention may be practiced otherwise than as specifically described.

## Claims

1. A method for scoring a one-player online pool game, comprising:
setting a countdown timer to a predetermined amount prior to taking a pool shot;
stopping the countdown time when a game ball is pocketed; and
awarding a player with a score that is related to the time that remains on the countdown timer when the ball is pocketed.

2. The method according to claim 1, wherein the player is awarded negative score for pocketing a queue ball.

3. The method according to claim 1, wherein, if the player pockets multiple balls at the same time, the player is awarded a score that equal to the time that remains on the countdown time when the balls are pocketed multiplied by the numbers of balls pocketed.

4. The method according to claim 1, further comprising:
designating at least one of the pockets on the pool table for bonus points; and
awarding the player bonus points when the a ball is pocketed in the at least one designated pockets.

5. The method according to claim 1, further comprising;
designating at least one of the game balls on the pool table for bonus points; and
awarding the player bonus points when the at least one designated game ball is pocketed.

6. The method according to claim 1, further comprising:
designating at least one of the pockets on the pool table for bonus points;
designating at least one of the game balls on the pool table for bonus points; and
awarding the player bonus points when the at least one designated game ball is pocketed in the at least one designated pockets.
